Europäisches Patentamt

European Patent Office

Office européen des brevets

(11) Publication number: **0 095 273**

**A1**

## (12) EUROPEAN PATENT APPLICATION

(21) Application number: **83302594.3**

(22) Date of filing: **09.05.83**

(51) Int. Cl.³: **G 01 D 5/34**
**G 02 B 5/14**

(30) Priority: **21.05.82 GB 8214943**
**23.07.82 GB 8221376**

(43) Date of publication of application:
**30.11.83 Bulletin 83/48**

(84) Designated Contracting States:
**DE FR IT**

(71) Applicant: **MARCONI AVIONICS LIMITED**
**Airport Works**
**Rochester Kent(GB)**

(72) Inventor: **Prior, Norman John**
**62 Southview Road**
**Southborough Tunbridge Wells Kent(GB)**

(72) Inventor: **Ellis, Stafford Malcolm**
**Midways Willowhayne Estate Angmering Lane**
**East Preston West Sussex(GB)**

(74) Representative: **Pope, Michael Bertram Wingate**
**The General Electric Company Limited Central Patent**
**Department Hirst Research Centre East Lane**
**Wembley Middlesex HA9 7PP(GB)**

(54) Optical methods of measuring displacements.

(57) An optical method of measuring displacement of an object in which a light beam from a source 9a, 9b, 9c is directed onto a detector 23 through an optical filter 21 which has a frequency response which varies spatially in at least one direction transverse to the light beam, and which is arranged such that displacement of the object causes the filter to be displaced relative to the light beam. The transmission efficiency between the source 9a, 9b, 9c and detector 23 for light within each of at least two frequency bands $f_1$, $f_2$, $f_3$ lying within the frequency response of the filter 21 are measured and changes in the efficiencies resulting from a displacement of the object are compared. Apparatus for use in the method is also disclosed.

Fig. 1.

This invention relates to optical methods of measuring the displacement of an object.

In a known optical method of measuring the displacement of an object, a detector is arranged to measure light received by the detector from a light source, and the object is arranged such that any displacement of the object in a direction perpendicular to the light path between the source and detector will cause a variation in the amount of light measured by the detector so that variation in the amount of light measured by the detector is indicative of the displacement of the object.

This method, however, suffers the disadvantages that the amount of light measured by the detector will also vary according to the sensitivity of the detector, the light output of the source, and other variations within the light path, these all being factors which may vary with time. Whilst variations in the sensitivity of the detector, and changes in the output of the light source may be partially compensated for by the use of a reference beam, it is difficult to compensate for variations in the light path.

It is an object of the present invention to provide an optical method of measuring displacement of a body wherein these disadvantages may be overcome.

According to the present invention an optical method of measuring displacement of an object comprises: directing a light beam from a light source onto a detector through an optical filter which has a frequency response which varies spatially in at least one direction transverse to the light beam and which is arranged such that displacement of the object causes the said filter to be displaced relative to the light beam; measuring the transmission efficiency between the source and detector for light within each of at least two frequency bands lying within the frequency response of the filter;

and comparing the changes in said efficiencies resulting from a displacement of the object.

The invention also provides an apparatus for use in a method according to the invention comprising: a plurality of light sources, each effective to produce light within a different frequency band; an input detector effective to measure the amount of light produced by each of said sources; an optical filter having a frequency response which varies spatially over the filter, and which includes a plurality of areas each of which is responsive to light in a different one of said frequency bands, said filter being arranged such that displacement of said object causes said filter to be displaced relative to the light passing from each said source; an output detector effective to measure the amount of light passing through said filter from each said source; and means for comparing the ratios of the readings of the output and the input detectors for light from each of said sources.

The invention also provides a displacement sensor for use in a method according to the invention comprising: a light guide; a concave reflective element positioned such that one end of said light guide is at the centre of curvature of said reflective element; a concave optical filter having a frequency response which varies spatially over the filter interposed between said light guide and said reflective element, said filter being fixed in position with respect to said reflective element, and said reflective element being supported so as to permit it angular movement relative to said light guide about at least one axis passing through said one end.

In one particular sensor in accordance with the invention, between said one end and said filter there is a limiting aperture, the diameter of which is less than the length of the chord of the aperture of said reflective element. In such a sensor preferably said light guide is mounted on one part of a joint, and said filter and said reflective element are mounted on a second part of said joint which is angularly moveable about said one axis.

One optical method of measuring the displacement of an object in accordance with the invention together with an apparatus for use in such a method will now be described, by way of example only, with reference to the accompanying drawings in which:

Figure 1 is a schematic diagram of the apparatus;

Figure 2 shows schematically a detail of part of the apparatus shown in Figure 1;

Figure 3 shows a first example of a filter for use in the apparatus of Figure 1;

Figure 4 shows a first alternative configuration for the part of the apparatus shown in Figure 2;

Figure 5 shows a second alternative configuration for the part of the apparatus shown in Figure 2;

Figure 6 shows a second example of a filter for use in the apparatus of Figure 1; and

Figure 7 shows a third example of a filter for use in the apparatus of Figure 1;

Figure 8 shows a longitudinal section through a sensor unit suitable for use in the apparatus of Figure 1;

Figure 9 shows a section on IX - IX of Figure 8; and

Figure 10 showns a section on X - X of Figure 8.

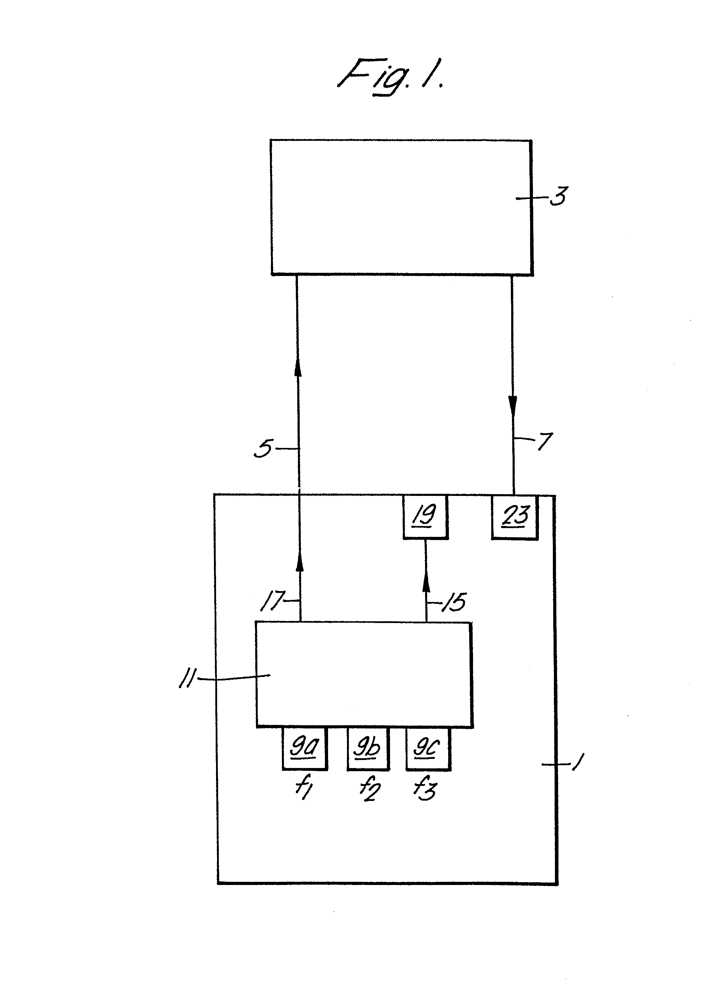

Referring firstly to Figure 1, the apparatus comprises a first unit 1 containing electronic, electro-optic and optical components, and a sensor unit 3 located at the object (not shown) whose displacement is being monitored, the two units being optically linked by input and output optical fibres 5 and 7. The first unit 1 includes three light sources, $9\underline{a}$, $9\underline{b}$, $9\underline{c}$ each source being capable of emitting light within a different frequency band $f_1$, $f_2$, or $f_3$ respectively. The output from each of the sources $9\underline{a}$, $9\underline{b}$, $9\underline{c}$ is coupled, via an optical coupler 11 into each of two fibres 15 and 17. The first fibre 15 is coupled to a first light detector 19, whilst the second fibre 17 leads to the input fibre 5 to the sensor unit 3.

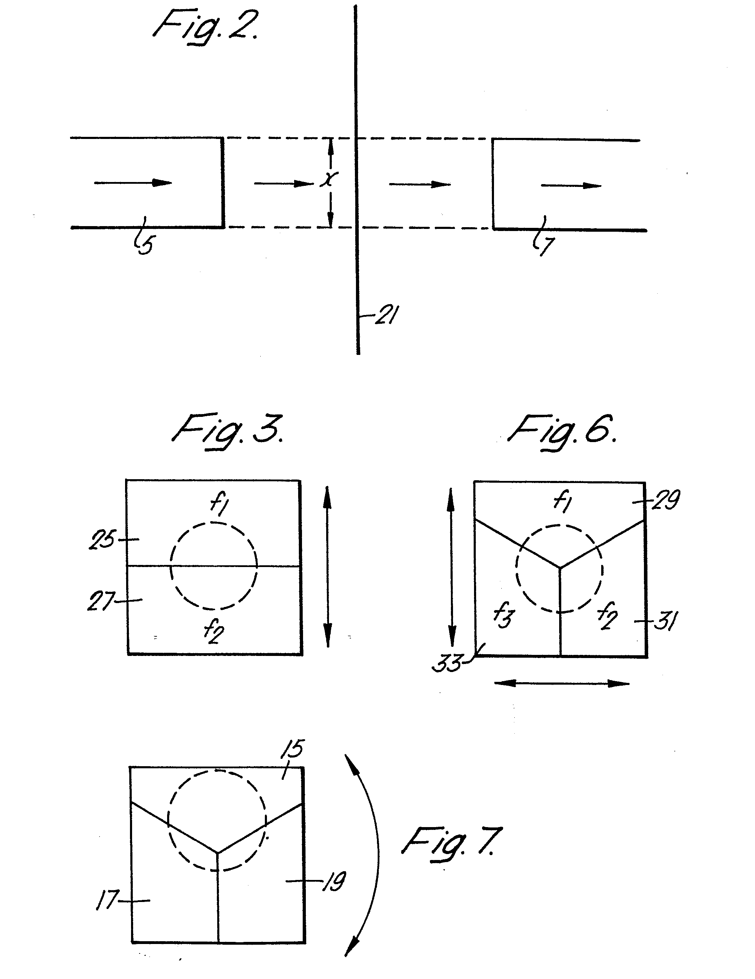

Referring now also to Figure 2, the same features being labelled by the same reference numerals throughout the figures, the unit 3 includes a composite light filter 21 disposed between the input 5 and output 7 fibres. The fibres 5, 7 are aligned so that light passing along the input fibre 5 will pass via the filter 21 into the output fibre 7, the output fibre being coupled at its end remote from the filter 21 to a second light detector 23 located in the unit 1.

The filter 21 is attached to the object (not shown) whose displacement is being monitored, the form of the filter 21 depending on the nature of the displacement being monitored. In the example shown in Figure 3, the filter consists of two rectangular strips 25, 27 of filter material arranged one above the other, each strip being effective to selectively attenuate, or selectively transmit light within a respective one of the frequency bands $f_1$, $f_2$. The position of the filter 21 is chosen such that for zero displacement any light transmitted by the fibre 5 will fall centrally on the filter as indicated by the dotted circle.

In use of the apparatus each of the two light sources $9\underline{a}$, $9\underline{b}$ is switched on in turn. Readings are taken of the light received at the first detector 19, and the second detector 23, and thus the optical transmission efficiencies for light in each of the two frequency bands $f_1$, $f_2$ through the system can be determined. Any vertical movement of the object will cause a corresponding displacement of the filter 21, i.e. in the direction of the arrows in Figure 3. The amount of light in each of the two frequency bands received by the second detector 23, and hence the optical transmission efficiencies of light in the two frequency bands $f_1$, $f_2$, will change. An indication of the displacement of the object may then be obtained by comparing the changes in the transmission efficiencies.

It will be appreciated that as it is the ratios of the optical transmission efficiency for light within each of the frequency bands which are compared rather than comparison of the actual amounts of light received by the second detector 23, this method of monitoring displacement of an object is therefore insensitive to differences in output of the sources, detector responses, and variations within the optical path with time.

The effective range of displacement of the object which can be measured by this method is determined by the width of the optical path between the input 5 and output 7 fibres, x as shown in Figure 2. This may be extended by interposing a convex lens 20 between the input fibre 5 and the composite filter 21 as shown in Figure 4, the effective displacement range then being the distance y indicated in the figure. Alternatively the input 5 and output 7 fibres may be combined in a single fibre, as shown in Figure 5. Light then passes from the composite fibre, through the filter, to be reflected back through the filter and into the fibre by a concave mirror 24, the effective displacement range then being the distance z marked. This latter arrangement also has the advantage that the light is acted on by the filter twice, and thus the optically active parts of the filter can be thinner.

Where it is desired to monitor displacement of the object in both the horizontal and the vertical directions together, a filter 22 of the form shown in Figure 6 may be used in the unit 3 in the place of the filter 21. In the filter 22 three filter elements 29, 31, 33, each selectively responsive to light within a different one of the frequency bands $f_1$, $f_2$, $f_3$, are arranged as shown in the Figure, each element being adjacent to the two other elements. The position of the filter 22 is chosen such that for zero displacement any light transmitted by the fibre 5 will fall centrally on the filter as indicated by the dotted circle. In use of the apparatus each of the three light sources 9a, 9b, 9c is switched on in turn, and the optical transmission efficiencies of light in each of the three frequency bands $f_1$, $f_2$, $f_3$, through the system determined. Any displacement of the object within the plane of the filter 22, will cause a corresponding displacement of the filter, which will thus cause the optical transmission efficiences of the light within the three frequency bands to change, a change which can be related to the displacement of the object.

This last mentioned filter can also be used to monitor rotational displacement of the object about an axis passing through the centre of the filter, as indicated in Figure 7. In this case the position of the filter is chosen such that any light transmitted by the fibre 5 for zero displacement will fall off-centre of the filter as indicated by the dotted line. The amount of rotation of the object can then be deduced from any change in the optical transmission efficiencies of the light within the three frequency bands as before.

It will be appreciated that many other filters, including filters operating by reflection as well as transmission, for use in a method in accordance with the invention may be devised.

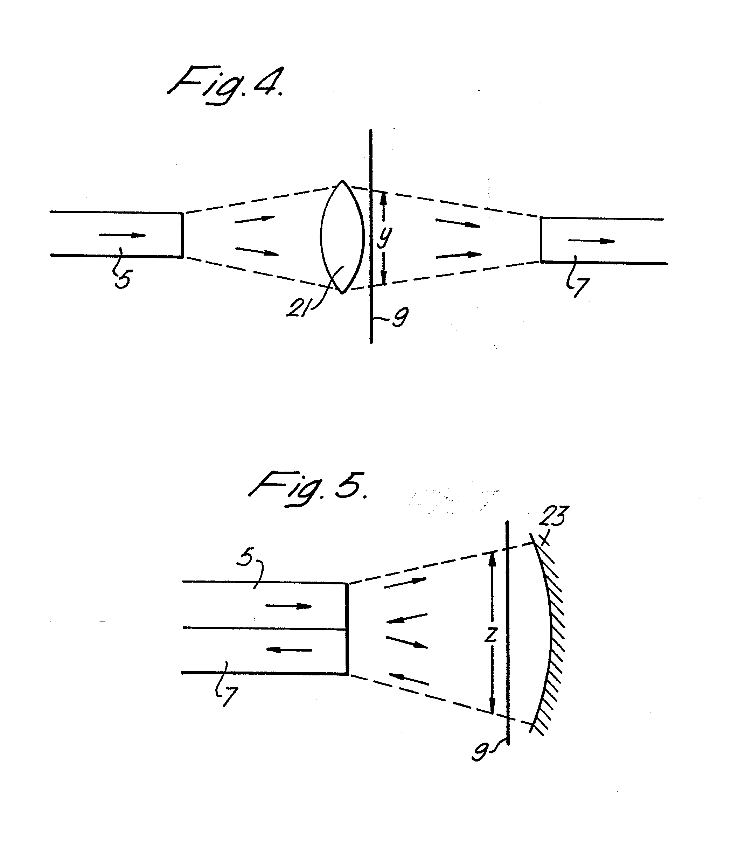

Referring now to Figure 8, the sensor unit to be described is particularly adapted for measuring the relative angular displacement of two parts 101,103 of a joint about a transverse axis defined by a hinge pin 104. The sensor includes a light guide, 105, in the form of a fibre-optic monofilament, one free end 107 of which lies at the centre of curvature of a concave reflective element 109. Between the end 107, and the reflective element 109 is an optical filter 111, spherical in form, and having a frequency response which spatially varies continuously over the filter. The reflective element 109, and the optical filter 111 are coatings on the convex and concave surfaces, respectively, of a spherical shell 113 of optically refractive material, such for example as glass. Alternatively the two coatings could be deposited the one on the other with the reflective coating adherent to a concave surface of a substrate, or the reflective element could be a polished metal concave spherical reflector surface coated with optical filter material.

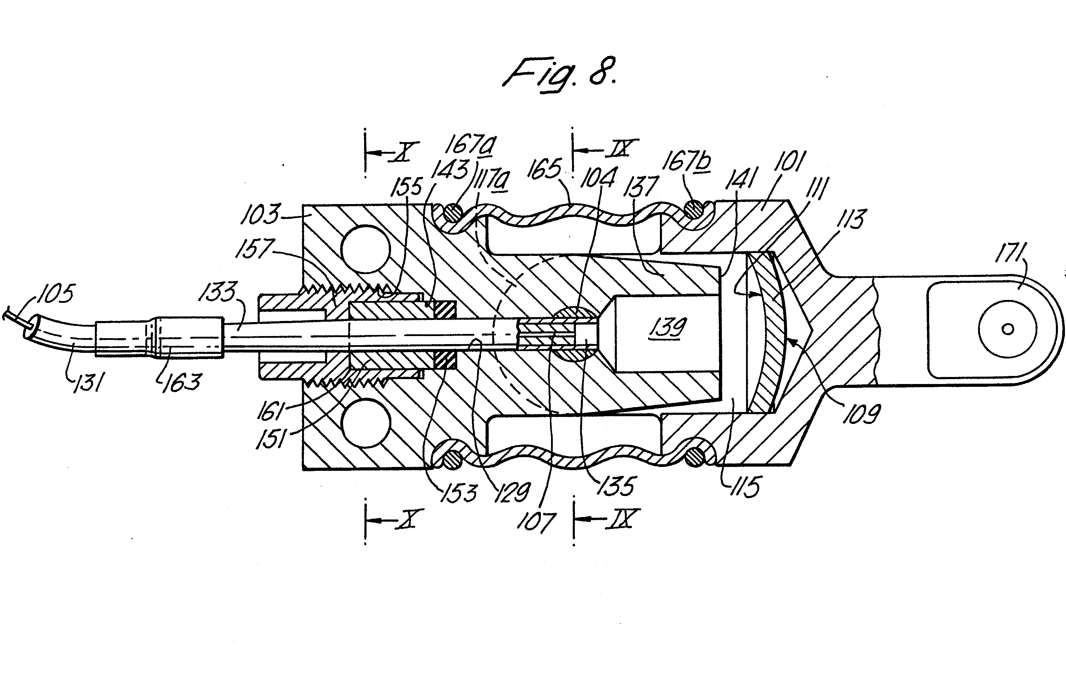

The shell 113, with its coatings, is located within a cavity 115 in the part 101 of the hinged joint. Referring now also to Figure 9 the part 101 has two forwardly extending ear portions 117a, 117b. The ear portions 117a, 117b are solid with the outer races 119a, 119b, of bearings 121a 121b respectively, the inner races 123a, 123b of which are solid with the hinge pin 104. The pin 104 is, itself, solid with the other relatively angularly movable part 103. Between the part 103 and the inner races 123a, 123b there are spacer washers 127a, 127b.

The light guide 105 extends from its end 107 along an axial passage 129 through the part 103. It is protected by a plastic cladding 31 and is supported along its length by a rigid, e.g. metal, cartridge 133. The free end 107 of the light guide 105 is positioned within a transverse passage 135 through the hinge pin 104. The part 103 has a nose portion 137 formed with a cylindrical cavity 139 leading from the passage 135. The leading circular edge 141 of the cavity 139 constitutes a limiting aperture for light transmitted to and reflected from the reflective element 109. The diameter of the limiting aperture is, as shown, less than the length of the chord of the aperture of the spherical reflective element 109. The provision of a limiting aperture ensures a constancy in the solid angle from the free end 107 of the light guide 105 to the reflective element 109 for a range of angular positions of the latter element.

There is an enlargement 143 at the entrance to the passage 129. The enlargement 143 receives part of a collar 151 and an O-ring 153. There is a further, preceding, enlargement 155 threaded to receive a nut 157, a cavity 159 of which receives the remainder of the collar 151 and a washer 161. The cartridge 133 extends through the collar 151 and the nut 157 into a sleeve 163. Thereafter the cartridge 133 terminates exposing the clad monofilament. The joint is protected by a flexible boot 165 linking the two parts 101, 103 and held in position by circular elements 167a, 167b which locate the ends of the boot 165 in circumferential grooves in the respective parts.

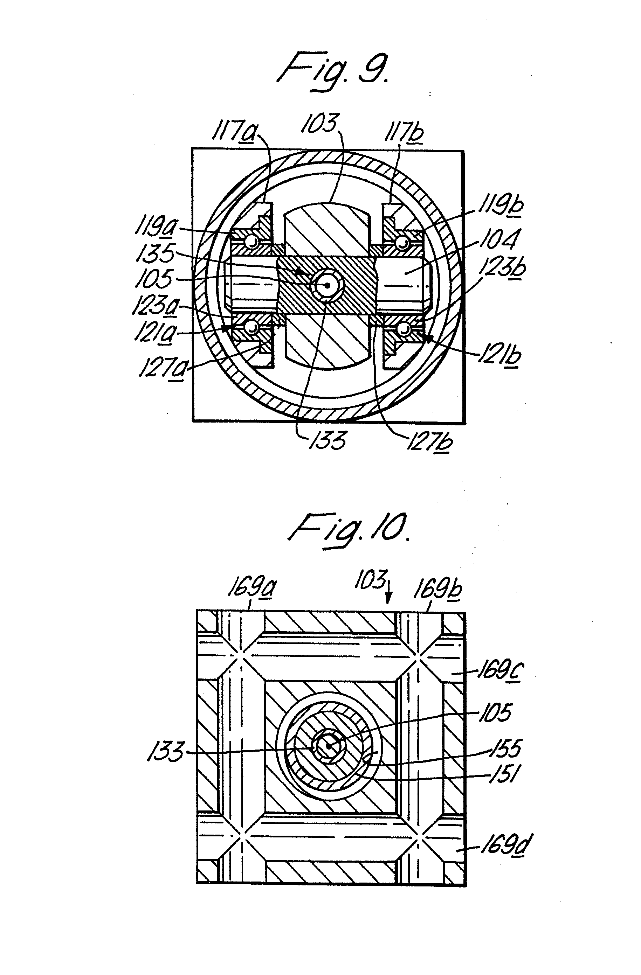

The sensor is mounted so that the part 103 is fixed and the part 101 angularly displaceable with respect thereto about the hinge pin 104. As shown in Figure 10 the part 103 has bolt holes as 169a to 169d for use in securing the part 103 to a frame (not shown). The part 101 has an arm 171 adapted to be connected to a member whose angular displacement is to be measured (not shown).

In use the light guide 101 is connected to a unit (not shown) such as that indicated as 1 in Figure 1. The mode of operation is then as described above with respect to Figures 1 and 5.

In the sensor unit described above the joint has a single hinge axis and measurement of angular displacement by the sensor is, therefore, limited to displacement about that hinge axis. It should be appreciated that using a universal joint instead of the hinge measurement of displacement about two orthogonal axes may be accomplished.

Whilst in the above embodiment, ball bearings are employed at the hinge for small angular displacement measurements a crossed spring pivot could be substituted.

It will be appreciated that other optical filters, such for example, as those shown in Figures 3, 6 and 7 could be incorporated in the sensor unit described herebefore instead of a filter having a frequency response which varies continuously over the filter.

It will also be appreciated that many apparatuses other than the one described herebefore may also be used in a method in accordance with the invention.

Whilst in the method and the apparatus described herebefore by way of example the filter moves relative to the light path, it will be appreciated that the reverse situation may be used in a method according to the invention, i.e. displacement of the object causing movement of the light path relative to the filter, minor differences to the form of the apparatus used then being necessary.

## CLAIMS

1. An optical method of measuring displacement of an object in which a detector (23) is arranged to measure light received by the detector (23) from a light source (9a, 9b, 9c), and the object is arranged such that, any displacement of the object in a direction perpendicular to the light path between the source (9a, 9b, 9c) and the detector (23) will cause a variation in the amount of light measured by the detector, so that said variation is indicative of the displacement of the object, characterised in that:said light is arranged to pass through an optical filter (21) which has a frequency response which varies spatially in at least said direction and which is arranged such that displacement of the object causes said filter (21) to be displaced relative to the light beam; the transmission efficiency between the source (9a, 9b, 9c) and detector (23) for light within each of at least two frequency bands ($f_1$, $f_2$, $f_3$) lying within the frequency response of the filter (21) is measured; and the changes in said efficiencies resulting from a displacement of the object are compared.

2. An apparatus for use in a method according to Claim 1 characterised in that it comprises: a plurality of light sources (9a, 9b, 9c) each effective to produce light within a different frequency band ($f_1$, $f_2$, $f_3$); an input detector (19) effective to measure the amount of light produced by each of said sources (9a, 9b, 9c); an optical filter (21) having a frequency response which varies spatially over the filter, and which includes a plurality of areas each of which is responsive to light in a different one of said frequency bands said filter (21) being arranged such that displacement of said object causes said filter (21) to be displaced relative to the light passing from each said source (9a, 9b, 9c); an output detector (23) effective to measure the amount of light passing through said filter (21) from each said source (9a, 9b, 9c);   and means for comparing the ratios of the readings of the output (23) and the input (19) detectors for light from each of said sources (9a, 9b, 9c).

3.   A displacement sensor for use in a method according to Claim 1 characterised in that it comprises:   a light guide (105); a concave reflective element (109) positioned such that one end of said light guide (105) is at the centre of curvature of said reflective element (109);   a concave optical filter (111) having a frequency response which varies spatially over the filter (111) interposed between said light guide (105) and said reflective element (109) said filter (111) being fixed in position with respect to said reflective element (109), and said reflective element (109) being supported so as to permit its angular movement relative to said light guide (105) about at least one axis passing through said one end.

4.   A sensor according to Claim 3 in which between said one end and said filter there is a limiting aperture (141), the diameter of which is less than the length of the chord of the aperture of said reflective element (109).

5.   A sensor according to either Claim 3 or 4 in which said light guide (105) is mounted on one part (103) of a joint, and said filter (111) and said reflective element (109) are mounted on a second part (101) of said joint which is angularly moveable about said one axis.

6.   A sensor according to Claim 5 in which the two parts (101, 103) of the joint are angularly displaceable about a single hinge axis (104).

7.   A sensor according to Claim 5 in which the two parts (101, 103) of the joint are angularly displaceable about two orthogonal hinge axes.

8. A sensor according to any one of Claims 4 to 7 in which said reflective element (109) and said filter (111) are coatings on the convex and concave surfaces respectively of a spherical shell (113) of optically refractive material.

9. A sensor according to any one of Claims 4 to 7 in which said reflective element (109) and said filter (111) are successive surfaces upon a concave substrate.

10. An optical filter or a sensor according to any one of Claims 3 to 9 comprising two adjacent strips of filter material (25, 27), each strip being effective to selectively attenuate, or selectively transmit light within a different one of said frequency bands ($f_1$, $f_2$).

11. An optical filter for use in an apparatus according to Claim 2 or in a sensor according to any one of Claims 3 to 9 comprising three areas (29, 31, 33) of filter material, each area being effective to selectively attenuate, or selectively transmit light within a different one of said frequency bands ($f_1$, $f_2$, $f_3$), each of said areas being adjacent to the two other areas.

12. An optical filter (111) for use in an apparatus according to Claim 2 or in a sensor according to any one of Claims 3 to 9 comprising an area which has a frequency response which varies spatially continuously over said area.

0095273

Fig. 1.

Fig.2.

x

5

7

21

Fig.3.

f1

25

27

f2

Fig.6.

f1

29

f3

f2

31

33

15

17

19

Fig.7.

*Fig.4.*

*Fig.5.*

0095273

4/5

Fig. 8.

Fig. 9.

Fig. 10.

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | EP 83302594.3 |
| A | US - A - 4 275 295 (MENNINGEN) <br> * Fig. 5 * | 1,2 | G 01 D 5/34 <br> G 02 B 5/14 |
| A | US - A - 4 270 050 (BROGARDH) <br> * Fig. 6 * | 1,2,3 | |
| A | GB - A - 2 078 943 (WESTINGHOUSE) <br> * Fig. 2,7,11 * | 1,2,3 | |
| A | US - A - 4 281 245 (BROGARDH) <br> * Fig. 1,1a,2,5a-5l,10,14a; column 2, line 31 - column 3, line 28; column 4, lines 11-60; column 6, line 11 - column 8, line 59; column 9, lines 27-45 * | 1,2 | |
| A | US - A - 4 293 188 (MC MAHON) <br> * Fig. 1-3,7,16,17 * | | **TECHNICAL FIELDS SEARCHED (Int. Cl. ³)** <br><br> G 01 B 9/00 <br> G 01 B 11/00 <br> G 01 D 5/00 <br> G 02 B 5/00 <br> G 02 B 27/00 |

The present search report has been drawn up for all claims

| Place of search | Date of completion of the search | Examiner |
|---|---|---|
| VIENNA | 22-08-1983 | KUNZE |